# EUROPEAN PATENT SPECIFICATION

(11) **EP 1 586 282 B1**
(45) Date of publication and mention of the grant of the patent: **08.08.2012**
(21) Application number: 04711493.9
(22) Date of filing: 16.02.2004
(51) Int. Cl.: A61C 13/235

(54) **DENTURE ATTACHMENT**
ZAHNPROTHESENBEFESTIGUNG
FIXATION POUR PROTHÈSE DENTAIRE

(30) Priority: 17.02.2003 JP 2003038582
(43) Date of publication of application: 19.10.2005
(73) Proprietor: Aichi Steel Corporation, Tokai-shi, Aichi-Ken 476-8666 (JP)
(72) Inventor: HONKURA, Yoshinobu, c/o Aichi Steel Corporation, Arao-machi, Tokai-shi, Aichi 4768666 (JP); ARAI, Kazuo, c/o Aichi Steel Corporation, Arao-machi, Tokai-shi, Aichi 4768666 (JP); KIKUCHI, Eiki, c/o Aichi Steel Corporation, Arao-machi, Tokai-shi, Aichi 4768666 (JP); LIN, Che-tong, Taipei 110 (TW) (TW); SHIAU, Yuh-yuan c/oNat. Taiwan University Hospital, Taipei 110 (TW) (TW)
(74) Representative: Kramer - Barske - Schmidtchen
(86) International application number: PCT/JP2004/001662
(87) International publication number: WO 2004/082513

(56) References cited:
- JP-A- 5 068 688
- JP-A- 8 150 156
- JP-A- 2000 308 648
- JP-A- 2002 186 630
- US-A- 5 337 033

## Description

### FIELD OF ART

This invention relates to a denture attachment which is used so as to embed a denture by magnetic attractive force.

### BACKGROUND OF ART

In dental treatment, as is shown in patent material 1, because of the easiness of putting on or removing, various denture attachments which utilize magnetic attractive force have been proposed.

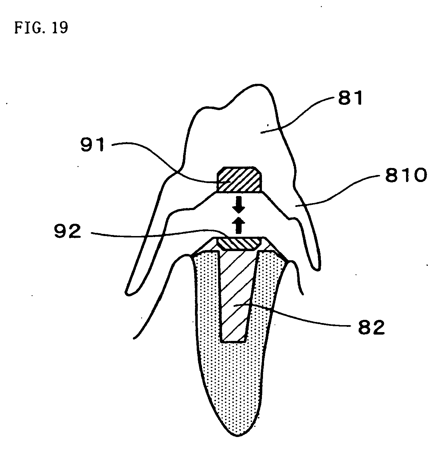

Dental attachment 91 housed magnetic body is, as is shown in FIG 19, embedded in dental base 810 fixed denture 81. On the tooth root side, keeper 92 made of soft magnetic material is embedded in root cap 82 or implant (FIG is abbreviated). By this, denture housed denture attachment 91 can be fixed to keeper 92 by the magnetic attractive force.

Said denture attachment 91 is fixed to said dental base 810 with adhesive of room temperature polymerization resin etc. The fitting strength greatly influences the endurance of whole denture 81 which houses said denture attachment 91. Therefore, to improve the fitting strength between denture attachment and dental base, making a part protruding axially outward from the outer peripheral surface thereof, a so-called under cut effect thereof is proposed (See patent material 2).

The following documents disclose magnetic denture attachments:
Japanese published patent application JP7136190 and
Japanese utility model application 6-86715.

Document US 2002/0115041 discloses the closest prior art to the subject-matter of appended claim 1.

When the denture attachment is fixed in dental base, it is necessary to prepare adhesive in the recess of the dental base beforehand, push the dental attachment by giving a stress on it and make the adhesive go around as far as the outer peripheral surface. In contrast, when only a protruding part is made, as in the prior art, the protruding part prevents the fluidity of adhesive and without exerting enough under cut effect, the connecting strength can not be improved much.

Still, in this structure, when the turning force to turn relatively is added between dental base and denture attachment, the problem that the dental attachment turns more easily relative to the dental base is generated because the outer peripheral surface of the dental attachment and said protruding part are constructed in concentric configuration.

To solve prior problems, this invention provides a dental attachment that is greatly improved over prior objects in fixing strength and can more effectively prevent turning to the dental base.

In the following the term "collars" designates portions of one collar, which are protruding radially and are separated one from another.

### SUMMARY OF THE INVENTION

The invention of said dental attachment which is embedded in the dental base so as to face a keeper made of soft magnetic material in tooth root, comprises said magnetic element delivering magnetic attractive force, a yoke constituting a soft magnet material and having said recess for housing said magnetic element, and a disk joined so as to close said opening of said recess with said magnet element housed in said recess. And a dental attachment features said yoke has an almost disk shape and collars protruding radially outward from the outer peripheral surface thereof.

Said collars are formed to be separated in at least two locations in a substantially peripheral direction, and non-protruding portions having radially outward projection amounts of zero or up to 50% of the maximum projection amount at said collars are provided between respective collars.

The present invention has not only said collars protruding from outer peripheral surface of said yoke but also said non-protruding portions. The collars are formed to be separated in at least two locations in a substantially peripheral direction, and non-protruding portions are provided between respective collars. 'Substantially' means that the case in which said non protruding portions are a little projected and connected with collars is included in the notion that respective collars are formed to be separated.

In the present invention, because of the existence of both said collars and said non-protruding portion, the following excellent operation effect is exerted.

That is, in the case of connecting said dental attachment to a dental base, adhesive is applied in the recess made in the dental base, is contacted to the dental attachment and does not reach the outer peripheral surface. On the other hand, because of said non-protruding portion having projection amounts of zero or very little, adhesive passes the non-protruding portion and contacts the outer peripheral surface of the yoke almost without resistance and also flows easily to the peripheral direction. By flowing to the peripheral direction, the adhesive sufficiently contacts the outer peripheral surface facing said collars. That is, by the existence of said non-protruding portions, adhesive flows sufficiently to the back of said collars and said collars are embedded sufficiently in the adhesive. Therefore, undercut effect at the collars is sufficiently exerted.

Therefore, the dental attachment of the present invention can greatly improve the connecting strength over prior dental attachments.

Furthermore, due to plural protruding portions of collars, even when the force to turn relatively is added between dental base and dental attachment, the relative turn can be prevented by fitting said collars and adhesive.

Said non-protruding portions have, as mentioned above, radially outward projection amounts of zero or up to 50%of the maximum projection amount at the collars. If the projection amount is over 50% of the maximum projection amount at the collars, the mentioned fluidity of adhesive by the existence of non-protruding portions cannot be adequately secured.

### BRIEF DESCRIPTION OF THE DRAWINGS

FIG. 1 is a plane view of the dental attachment of embodiment 1;
FIG. 2 is a cross section view of arrowed A-A of FIG.1;
FIG. 3 is a cross section view of arrowed B-B of FIG.1;
FIG. 4 is a diagram for explaining the method of fitting a dental attachment to a dental base;
FIG. 5 is a plane view of the dental attachment of embodiment 2;
FIG. 6 is a cross section view of arrowed C-C of FIG. 5;
FIG. 7 is a cross section view of arrowed D-D of FIG. 5;
FIG. 8 is a plane view of the dental attachment of embodiment 3;
FIG. 9 is a cross section view of arrowed E-E of FIG. 9;
FIG. 10 is a cross section view of arrowed F-F of FIG. 10;
FIG. 11 is a plane view of a prior dental attachment as a comparative example of embodiment 4;
FIG. 12 is a cross section view of arrowed G-G of FIG. 10;
FIG. 13 is a plane view of another prior dental attachment as a comparative example of embodiment 4;
FIG. 14 is a cross section view of arrowed H-H of FIG. 13;
FIG. 15 is a diagram showing the structure of a trial machine of embodiment 4;
FIG. 16 is a diagram showing the condition that the dental attachment of present invention is fitted to the dental base in embodiment 5.
FIG. 17 is a diagram showing the condition that the prior dental attachment is fitted to the dental base in embodiment 5;
FIG. 18 is a cross section view of the dental attachment of embodiment 6 (This diagram corresponds to the diagram of arrowed A-A of FIG. 1);
FIG. 19 is a diagram showing the example of using the dental attachment in a prior example.

### THE BEST FORM FOR EMBODIMENT OF THE INVENTION

As the soft magnetic material constituting said yoke in present invention, various magnetic materials are available, for example, 17Cr-based stainless steel, 17Cr-2Mo-based stainless steel, and 19C r- 2Mo-based stainless steel etc. are preferable. These are excellent in resisting corrosion and the durability of the dental attachment can be improved.

As said magnetic element housed in said yoke, a magnet with high magneto motive force per unit volume is used. Specifically, for example Sm-Co-based or Nd-Fe- B-based rare earth magnets with high energy product are preferable.

Said disk can be made of non-magnetic material, but soft magnetic material is preferable, considering magnetic properties. As an available soft magnetic material for said disk in this case, various soft magnetic material is possible, and the same material as said yoke is also possible.

Also, it is preferable for the said disk to be connected with said yoke through a non-magnetic portion.

Said yoke made of soft magnetic material and said disk made of soft magnetic material can connect directly but, as is shown in embodiments, the intervention of non-magnetic material can prevent direct magnetic flux from said disk to yoke and magnetic absorbing force can be improved.

Connecting said disk to said yoke can be done by for example welding and the welding portion can be made of non-magnetic material.

For example, as materials for the ring portion between said yoke and said disk, non-magnetic stainless steel (for example, SUS316L) etc., which are non-magnetic anticorrosive material, can be used and well-known art that said yoke, ring material and disk are welded at one or two welding points by laser welding is available.

To get stable non-magnetism of welding portion, separately, it is enough to add the element to stabilize the austenite system. For one example, well-known art, the adding of only Ni or Ni-Cr alloy is available. As a way to add, those materials can be intervened between non-magnetic stainless steel and said yoke or said disk, or they can be added directly by wire etc. during melting, but the method of adding materials is limited to these methods.

Moreover, there is a way to make non-magnetism by direct addition of Ni or Ni-Cr alloy etc. to make non-magnetism between said yoke and said disk. But with this method, there is not enough stability of non-magnetism.

Also, the outer peripheral shape of said yoke is almost a round shape and the outer peripheral shape surrounding said collar and said non-protruding port is almost an oval shape and it is preferable that a pair of said collars is formed in the major axis direction of said oval shape and a pair of said non-protruding portion is formed in the minor axis.

In this case, because of the existence of two non-protruding portions formed in the minor axis, said fluidity effect of adhesive can be adequately secured, and by two collars formed in the major axis, enough under cut effect can be secured. Especially, in the case that a recess formed in the dental base is round in shape, because the distance of said non-protruding portion and the wall of recess is larger than the distance between said collars in the major axis and the wall of the recess, the fluidity of adhesive through the non-protruding portion can be improved.

Also the outer shape of said yoke is almost round, and the outer shape surrounding said collars and non-protruding portion has a bigger diameter than said yoke, and outer peripheral shape of almost round shape of concentric circles which is cut by plural tangents contacting the outer peripheral surface of said yoke. It is preferable that the part which is not cut and left is said collars and the part which is cut is said non-protruding portion.

Specifically, as follows, the shape shown in embodiment 2 and other shapes are possible. In this case, the same operating effect as said above can be secured.

### EMBODIMENT 1

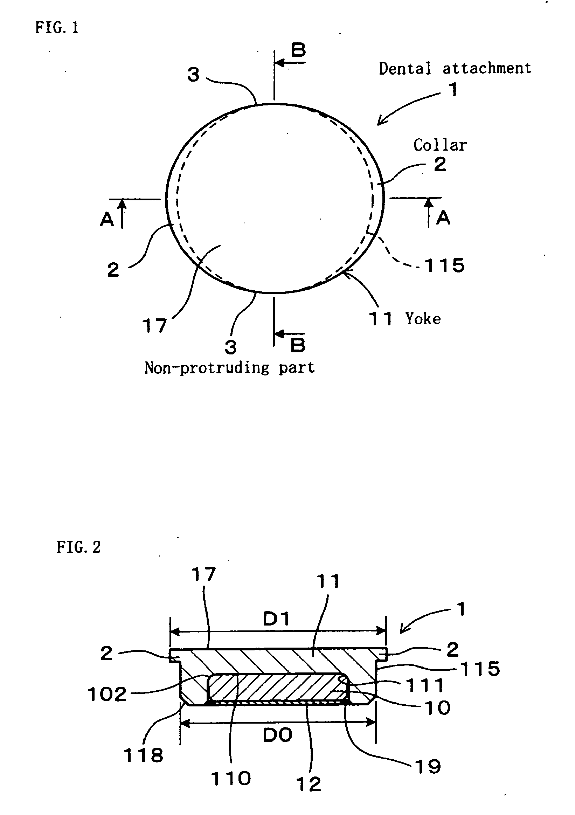

The dental attachment in the embodiment of the present invention is explained by using FIG. 1~ FIG. 4.

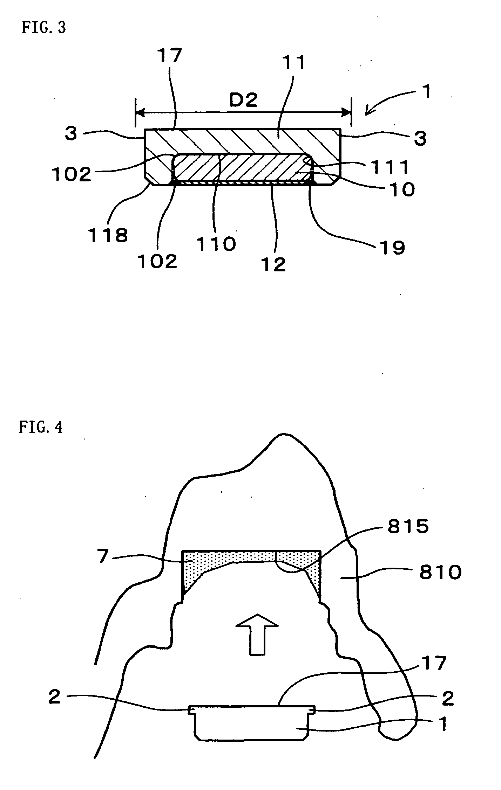

Dental attachment 1 in this example, as is shown FIG. 1~FIG. 3, is embedded in dental base 81 (FIG. 4) to face a keeper made of soft magnetic material in the tooth root (FIG. 19)

Dental attachment 1 is, as is shown FIG. 2, FIG. 3, composed of magnetic element 10 delivering magnetic attractive force, yoke 11 made of soft magnetic material which has recess 110 housing said magnetic element, disk 12 which is made of soft magnetic material and installed so as to close the opening of said recess 110 with said magnetic element 10 housed in said recess 110.

Yoke 11 is almost disk shaped and has collars 2 protruding radially outwardly from the outer peripheral surface 115.

Collars 2 are formed to be separated in at least two locations in a substantially peripheral direction, and between respective collars 2, non-protruding portion 3 having radially outward projection amounts of zero are provided.

The following describes this in further detail.

As is shown in FIG. 1~FIG.3, the outer peripheral shape of yoke 11 is almost round in dental attachment 1 of this example. As is shown in FIG.1, the outer peripheral shape surrounding collars 2 and non- protruding portion 3 is almost oval, and a pair of said collars 2 is formed in the major axis direction of said oval shape and a pair of said non-protruding portion 3 is formed in the minor axis direction.

Said yoke 11, made of soft magnetic material, 19Cr-2Mo-O. 2Ti-Fe, is made by machining. The specific size is as is shown in FIG. 1 and FIG. 2; the outer diameter D 0 of the yoke is 4.4 mm, the major axis D 1 of the oval including collars 2 and non-protruding portion 3 is 4.9 mm, the minor axis D 2 is the same 4.4 mm as the outer shape D 0 of yoke 11. That is, the maximum projection amounts of collars 2 is 0.25 mm and the projection amounts of the non-protruding portion 3 is zero.

Yoke 11 has recess 110 made by machining to house magnetic element 10. The inner diameter of recess 110 is 3.10 mm corresponding to the outer diameter of magnetic element 10 mentioned below, inner shoulder portion 111 has R part with the radius of curvature of 0.2 mm. Also, the edge of the outer periphery of the surface having recess 110 has taper-shaped chamfer 118.

For said magnetic element 10, an Fe-B based permanent magnet which is Nd-F(BH) max = 42 MGOe is used. Magnet element 10 has a columnar shape with 3.05 mm outer diameter and 0.6 mm height, and the corner of its top and bottom peripheral surface 102 is formed to be R part which has 0.2 radius of curvature.

For said disk 12, a disk made of soft magnetic material, 19Cr-2Mo-0. 2Ti-Fe, is used. After said magnetic element 10 is inserted in said recess 110 of said yoke 11, said disk is inserted and the edge of the outer periphery is welded to yoke 11 and welding portion 19 is made. Welding portion 19 is non-magnetic. More specifically, the ring material made of non-magnetic stainless steel (SUS316L), which is non-magnetic and anticorrosive material, is installed between said yoke 11 and said disk 12, and these are welded by laser welding.

Next, the method for connecting dental attachment 1 having a structure like this to dental base 810 is briefly explained.

Sa is shown in FIG. 4, in advance, dental base 810 has recess 815 to install dental attachment 1. Inner diameter of recess 81 is about 0.6 mm bigger than, for example, the maximum outer shape of dental attachment 1, that is, the major axis of oval with collars 2. The depth of recess 815 is, for example, about 0.3 mm bigger than the thickness of the entire dental attachment 1.

Recess 815 is equipped with suitable amounts of adhesive 7. As adhesive 7, for example, polymetacrylate (PMMA), which is room temperature polymerization resin, is used. With the surface 17 of dental attachment 1 (the surface opposite to the surface having recess 110) faced to recess 815 and advanced, the surface 17 of dental attachment 1 is contacted to adhesive 7. Still, by pushing forward dental attachment 1, adhesive 7 is flowed.

At this moment, adhesive 7 in recess 815 begins to flow from the surface side of dental attachment 1 to outer peripheral surface of yoke 11. Meanwhile, dental attachment 11 of the present example, as is mentioned above, has a pair of collars 2 and a pair of non-protruding portions 3. Because said collars 2, as is mentioned above, protrude radially outwardly as long as adhesive 7, which flows over this, does not flow radially inward, it does not reach outer peripheral surface 115. Meanwhile, because said non-protruding portion 3 has zero projection amounts from outer peripheral surface 115, adhesive 7 passes through the non-protruding portion and contacts outer peripheral 115 almost without resistance and flows easily to the peripheral direction. Due to this flowing to the peripheral direction, adhesive 7 sufficiently contacts outer peripheral surface 115 facing collars 2.

Therefore, collars 2 are sufficiently embedded in adhesive 7. So, the undercut effect can be exerted enough. Therefore, dental attachment 1 can greatly improve the connecting strength with dental base 810 over prior dental attachments.

Also, said collars 2 are made in plural positions and the whole shape is oval shape. Therefore, even when the turning force between dental base 810 and dental attachment 1 to turn relatively thereof is added, the fitting between collars 2 and adhesive 2 can prevent relative turning.

Still, though, in this example, the non-protruding portion does not protrude in the radial direction at all; if the projection amounts are less than 50% of the maximum projection amounts of collars 2, protruding in the radial direction can get the same operating effect.

### EMBODIMENT 2

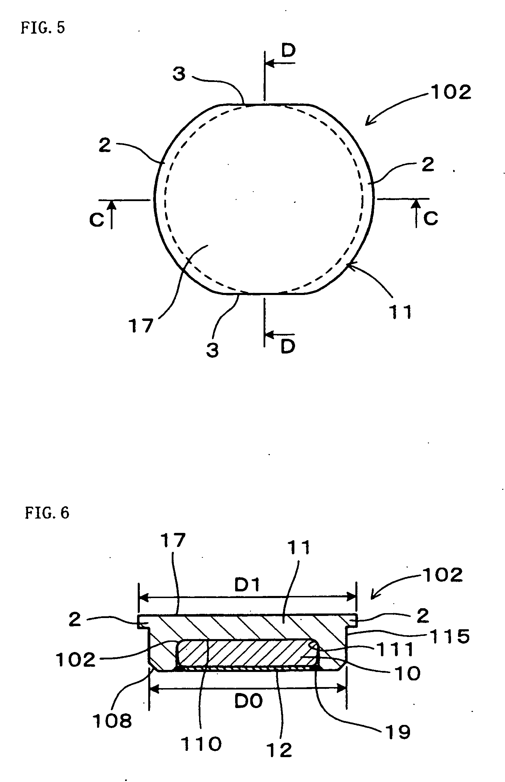

The present example, as is shown in Fig.5 ~ FIG.7, changes the shape of collars portion 2 of embodiment 1.

Dental attachment 102 of the present example has an almost round outer shape of yoke 11. Also, the outer shape surrounding collars 2 and non-protruding portion 3 has a bigger diameter than yoke 11 and the outer peripheral shape of the almost round shape of the concentric circle has a shape which is cut by two plural tangents contacting the outer peripheral surface 115 of yoke 11. Also, the opposite parts, which are not cut and left, are a pair of collars 2, and the parts which are cut are a pair of non-protruding portion 3. The maximum outer diameter D1 including collars 2 and the outer diameter D 2 of non-protruding portion 3 in this example has the same as the size of D1 and D 2 of embodiment 1. The others are the same as embodiment 1. Because denture attachment 1 of this example has said non-protruding portion 3, an operating effect similar to that of embodiment 1 can be secured. Still, because the outer shape of collars 2 has an arc shape of almost concentric circle of yoke 11, the processing can be relatively easily done.

### EMBODIMENT 3

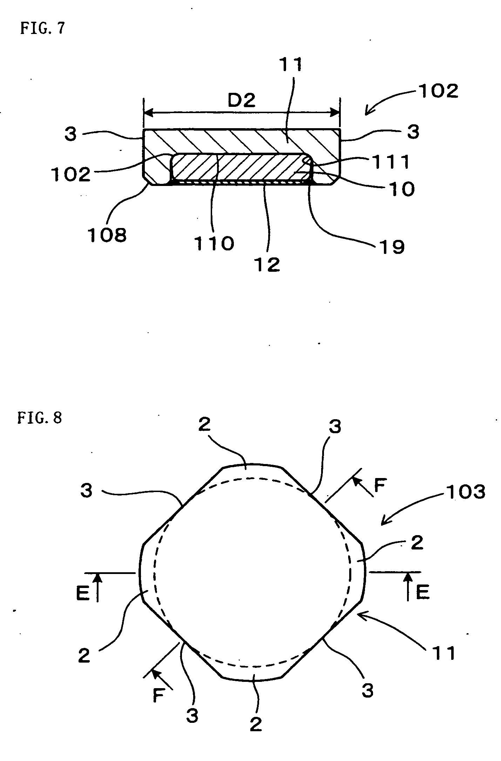

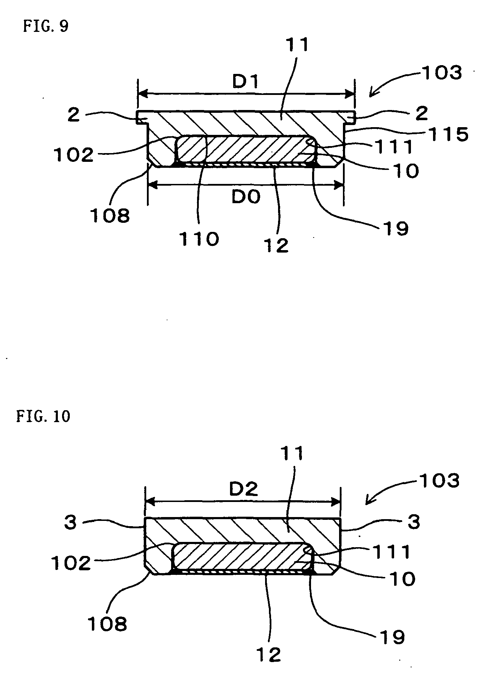

The present example, as is shown in FIG. 8 ~ FIG. 10, is another example changing the collars 2 in embodiment 1.

Dental attachment 103 of this example also has, like embodiments 1 and 2, an almost round outer shape of yoke 11. Also, the outer shape surrounding collars 2 and non-protruding portion 3 has a bigger diameter than yoke 11 and the outer peripheral shape of the almost round shape of the concentric circle has a shape which is cut by four plural tangents contacting outer peripheral surface 115 of yoke 11. Also, the parts which are not cut and left are four collars 2, and the parts which are cut are four non-protruding portion 3. The maximum outer diameter D1 including collars 2 and the outer diameter D 2 of non-protruding portion 3 in this example has the same size as D 1 and D 2 of embodiment 1. The others are the same as embodiment 1.

Because denture attachment 1 of this example 103 has said non-protruding portion 3 in four parts, the fluidity of adhesive can be improved further than in the case of said embodiment 1 and 2. But, the space of collars 2 becomes smaller than that of embodiments 1 and 2 and the undercut effect seems a little less than that of embodiments 1 and 2. Still, because the outer shape of collars 2 has the arc shape of almost concentric circle of yoke 11, processing can be relatively easily done.

### EMBODIMENT 4

In this example, an experiment to evaluate the connecting strength between adhesive and dental attachment 1, 102, 103 (test sample E1, E2, E3) of said embodiments 1, 2,and 3 is performed. Also, for comparison, two prior dental attachments (test sample C1, C2), are prepared and the same experiment is performed.

Each test sample E1, E2, and E3 has, as is mentioned above, the outer diameter of yoke 11 : 4.4 mm, the maximum outer diameter D2 of collar: 4.9 mm and the maximum protruding portion: 0.25 mm.

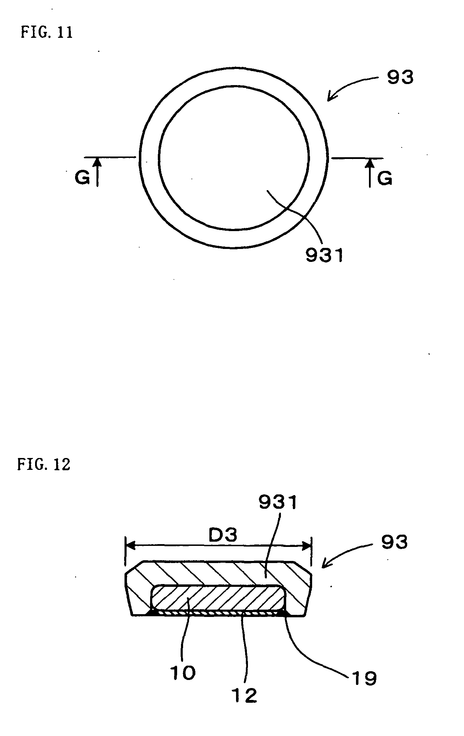

In one of the prior examples, dental attachment 93 (test sample C2), as is shown in FIG 11, 12, yoke 921 has no collars and the lateral part is a so called drum shape and the maximum outer diameter D3 is 4.4 mm. Magnetic element 10, disk 12 and welding portion 19 of yoke 921 is the same as that of dental attachment 1 of embodiment 1.

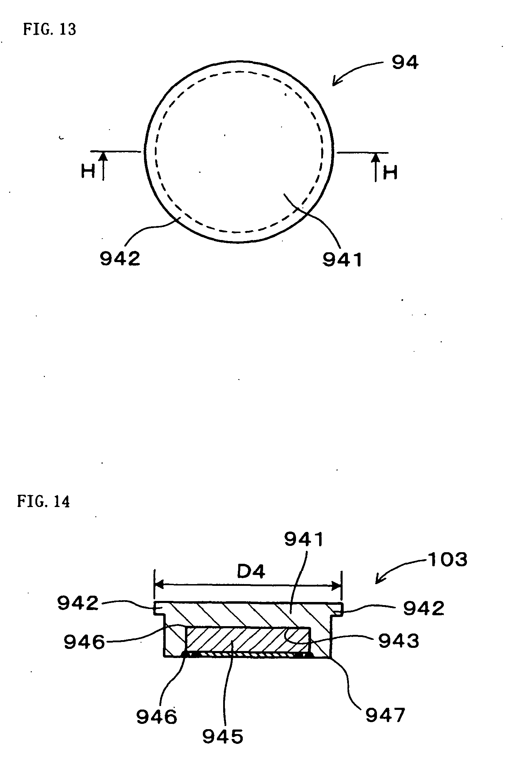

In another prior example, dental attachment 944 (test sample C3), as is shown FIG.13 and 14, the entire outer periphery of round shaped yoke 941 has round shaped collars 942. The outer diameter D1 of collars 942 is 4.9 mm and the maximum projection amounts are 0.25 mm like test samples E1, E2 and E3. Also, in dental attachment 94, as is shown in FIG 14, both corners 946 of housed magnetic element 945 are not R shape but right angled and the corner 947 of the surface having recess 943 of yoke 941 is also right angled and has no chamfer, which is different from dental attachments 1, 102 and 103 of embodiments 1~3.

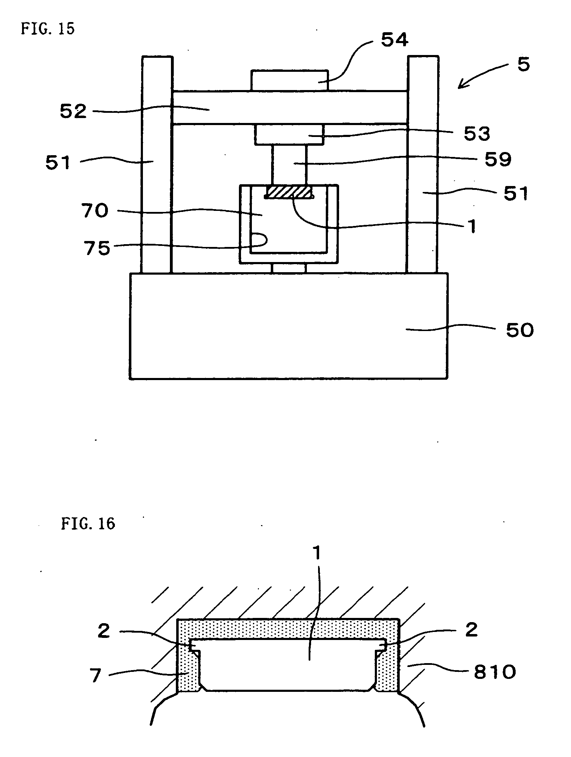

Next, instron type tester 5, shown in FIG. 15, measures the connecting strength between adhesive and said each test sample.

Tester 5 has a prop 51 on the holder 50 and ascent and descent part 52 which can go up and down between them. Also, ascent and descent part 52 has clamp portion 53 which clamp round bar 59 welded on the surface of the yoke of each test sample and load cell 54 to measure load. Also, holder 50 is made of the same material as the dental base (PMMA)and has a column shape with diameter 20 mm and depth 20 mm and fixes a container 70 which has recess 75 with diameter 15 mm at the center part.

First of all, after the recess 75 of container 70 is filled with (PMMA) as adhesive 7 and calcified, a hole with a diameter of 5 mm is made and again adhesive is filled and each test sample welded with round bar 59, dental attachment 1 etc. is pushed, left for a set time and calcified.

Next, container 70 with the joined test sample is put in a thermal cycle testing apparatus (NO FIG.)and a thermal test with 300 cycles of the temperature 4 and 60 each for one minute is performed. After that, the container 70 is set in said tester 5 and round bar 59 welded with the test sample is fixed on clamp part 53.

Also, a tensile test with a pulling speed of 0.5 mm / min F is performed and the tensile strength is valued as connecting strength.

The experimental results are shown in Table 1.

**(Table 1)**

| Test sample | The present invention | | | Prior example | |
|---|---|---|---|---|---|
| | E1 | E2 | E3 | C1 | C2 |
| Measured value (N) | 290 | 310 | 370 | 160 | 190 |

As Table 1 shows, the connecting strength of each test sample E1,E2,and E3 of the present invention has been much improved over that of prior samples C1 and C2.

### EMBODIMENT 5

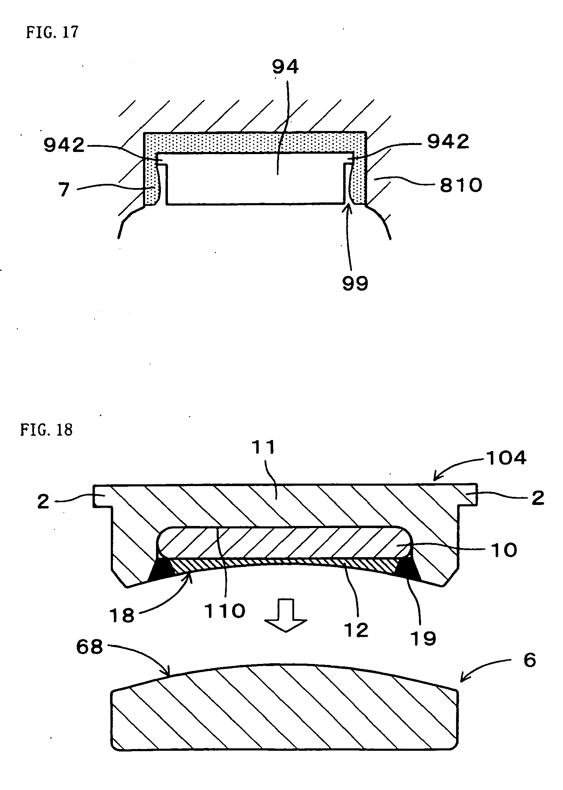

Next, FIG.16 and FIG.17 show the connecting condition with adhesive 7 when dental attachment 1 of test sample E1 and dental attachment 94 of test sample C2 are practically connected with dental base 810.

FIG.16 shows the case of dental attachment 1 of test sample E1, which has collars 2. Adhesive 7 adequately goes around to both faces. This is, as is mentioned above, because by making non-protruding portion 3, the flow ability effect of adhesive 7 is sufficiently exerted.

FIG.17 shows the case of attachment 94 of test sample C2. The adhesive 7 does not adequately go around to the back face of collars 942. Also, gap 99 is generated between dental attachment 94 and adhesive 7. This shows that without the non-protruding portion, adequate fluidity of adhesive cannot be secured.

### EMBODIMENT 6

The present example changes the shape of the absorbing face of the dental attachment of embodiment 1.

That is, as is shown in FIG. 8, dental attachment 104 of the present example uses a keeper which has a convex shaped absorbing face facing keeper 6. Also, the absorbing face 18 facing keeper 6 has a symmetric concave shape in dental attachment 104.

In this case, because absorbing face 18 of dental attachment 104 has a concave shape which is symmetric to convex shaped absorbing face 68 of keeper 6, both absorb well and both have a rotation function between them. Therefore, when occluding, the denture can fluctuate and rotate along keeper 6, without making a gap between dental attachment 104 and keeper 6.

It also obtains the same operating effect as in embodiment 1.

## Claims

1. A dental attachment (1; 102; 103; 104) which is embedded in a dental base (81; 810) so as to face a keeper made of soft magnetic material in a tooth root, **characterized in that**
said dental attachment (1; 102; 103; 104) comprises a magnetic element (10) delivering magnetic attractive force, a yoke (11) constituted of a soft magnet material and having a recess (110) for housing said magnetic element (10), and a disk (12) joined so as to close an opening of said recess (110) with said magnetic element (10) housed in said recess (110),
wherein said yoke (11) has an almost disk shape **characterised in that** said yoke (11) has collar portions (2) protruding radially outward from the peripheral surface thereof, wherein
said protruding collar portions (2) are separated in at least two locations in a substantially peripheral direction, and non-protruding collar parts (3) having radially outward projection amounts of zero or up to 50% of the maximum projection amount at said protruding collar portions (2) are provided between respective protruding collar portions (2).

2. The dental attachment (1; 102; 103; 104) according to claim 1, **characterized in that** said disk (12) is made of soft magnetic material.

3. The dental attachment (1; 102; 103; 104) according to claim 2, **characterized in that** said disk (12) is joined with said yoke (11) through a non-magnetic material part (19).

4. The dental attachment (1; 102; 103; 104) according to any one of claims 1to 3, **characterized in that** the outer peripheral shape of said yoke (11) is almost round and the outer peripheral shape of the surrounding protruding collar portions (2) and non-protruding collar parts (3) is almost oval, and a pair of said protruding collar portions (2) is formed in the major axis direction of said oval shape and a pair of said non-protruding collar parts (3) is formed in the minor axis direction.

5. The dental attachment (1; 102; 103; 104) according to any one of claims 1 to 3, **characterized in that** the outer shape of said yoke (11) is almost round, and the outer shape surrounding said protruding collar portions (2) and non-protruding collar parts (3) has a bigger diameter than said yoke (11), and an outer peripheral shape which is an almost round shape of concentric circles has a shape which is cut by plural tangents contacting the outer peripheral surface of said yoke (11) and the part which is not cut and left is said protruding collar portions (2) and the part which is cut is said non-protruding collar parts (3).

## Patentansprüche

1. Zahnbefestigung (1; 102; 103; 104), die in einer Zahnbasis (81; 810) so eingebettet ist, dass sie auf einen Halter, der aus einem weichmagnetischen Material hergestellt ist, in einer Zahnwurzel gerichtet ist, **dadurch gekennzeichnet, dass**
die Zahnbefestigung (1; 102; 103; 104) ein magnetisches Element (10), das eine magnetische Anziehungskraft bereitstellt, ein Joch (11), das aus einem weichmagnetischen Material aufgebaut ist und eine Aussparung (110) zum Aufnehmen des magnetischen Elements (10) aufweist, und eine Scheibe (12) umfasst, die so verbunden ist, dass sie eine Öffnung der Aussparung (110) verschließt, wobei das magnetische Element (10) in der Aussparung (110) aufgenommen ist,
wobei das Joch (11) nahezu scheibenförmig ist, **dadurch gekennzeichnet, dass** das Joch (11) Bundabschnitte (2) aufweist, die radial auswärts von dessen Umfangsfläche vorstehen, wobei
die vorstehenden Bundabschnitte (2) an mindestens zwei Stellen im Wesentlichen in der Umfangsrichtung getrennt sind und nicht-vorstehende Bundabschnitte (3), die ein Ausmaß des radial auswärts Vorstehens von Null bis zu 50 % des maximalen Ausmaßes des Vorstehens an den vorstehenden Bundabschnitten (2) aufweisen, zwischen jeweiligen vorstehenden Bundabschnitten (2) bereitgestellt sind.

2. Zahnbefestigung (1; 102; 103; 104) nach Anspruch 1, **dadurch gekennzeichnet, dass** die Scheibe (12) aus einem weichmagnetischen Material hergestellt ist.

3. Zahnbefestigung (1; 102; 103; 104) nach Anspruch 2, **dadurch gekennzeichnet, dass** die Scheibe (12) mit dem Joch (11) durch einen nicht-magnetischen Materialteil (19) verbunden ist.

4. Zahnbefestigung (1; 102; 103; 104) nach einem der Ansprüche 1 bis 3, **dadurch gekennzeichnet, dass** die äußere Umfangsform des Jochs (11) nahezu rund ist und die äußere Umfangsform der umgebenden vorstehenden Bundabschnitte (2) und der nicht-vorstehenden Bundabschnitte (3) nahezu oval ist, und ein Paar der vorstehenden Bundabschnitte (2) in der Hauptachsenrichtung der ovalen Form ausgebildet ist und ein Paar der nicht-vorstehenden Bundabschnitte (3) in der Nebenachsenrichtung ausgebildet ist.

5. Zahnbefestigung (1; 102; 103; 104) nach einem der Ansprüche 1 bis 3, **dadurch gekennzeichnet, dass** die äußere Form des Jochs (11) nahezu rund ist und die äußere Form, welche die vorstehenden Bundabschnitte (2) und die nicht-vorstehenden Bundabschnitte (3) umgibt, einen größeren Durchmesser aufweist als das Joch (11), und eine äußere Umfangsform, bei der es sich um eine nahezu runde Form von konzentrischen Kreisen handelt, eine Form aufweist, die durch eine Mehrzahl von Tangenten geschnitten wird, welche die äußere Umfangsfläche des Jochs (11) kontaktieren, und es sich bei dem übrigen Teil, der nicht geschnitten wird, um die vorstehenden Bundabschnitte (2) handelt, und bei dem Teil, der geschnitten wird, um die nicht-vorstehenden Bundabschnitte (3) handelt.

## Revendications

1. Fixation dentaire (1 ; 102 ; 103 ; 104) qui est emboîtée dans une base dentaire (81 ; 810) de façon à se trouver en regard d'une armature constituée d'un matériau magnétique doux dans une racine dentaire, **caractérisée en ce que** :
ladite fixation dentaire (1; 102; 103; 104) comprend un élément magnétique (10) délivrant une force d'attraction magnétique, un joug (11) constitué d'un matériau magnétique doux et ayant une cavité (110) pour y loger ledit élément magnétique (10) et un disque (12) joint de manière à fermer une ouverture de ladite cavité (110) avec ledit élément magnétique (10) logé dans ladite cavité (110),
dans laquelle ledit joug (11) a une forme presque en disque, **caractérisée en ce que** ledit joug (11) présente des portions de collier (2) faisant saillie radialement vers l'extérieur depuis sa surface périphérique, dans lequel
lesdites portions de collier saillantes (2) sont séparées à au moins deux endroits dans une direction sensiblement périphérique et les parties de collier non saillantes (3) ayant des quantités de saillie dirigées radialement vers l'extérieur de zéro ou jusqu'à 50 % de la quantité de saillie maximale dans lesdites parties de collier saillantes (2) sont prévues entre des portions de collier saillantes respectives (2).

2. Fixation dentaire (1; 102; 103; 104) selon la revendication 1, **caractérisée en ce que** ledit disque (12) est constitué d'un matériau magnétique doux.

3. Fixation dentaire (1; 102; 103; 104) selon la revendication 1, **caractérisée en ce que** ledit disque (12) est joint audit joug (11) via une partie de matériau non magnétique (19).

4. Fixation dentaire (1; 102; 103; 104) selon l'une quelconque des revendications 1 à 3, **caractérisée en ce que** la forme périphérique externe dudit joug (11) est presque ronde et la forme périphérique externe des portions de collier saillantes environnantes (2) et des parties de collier non saillantes (3) est presque ovale et une paire desdites portions de collier saillantes (2) est formée dans la direction de l'axe majeur de ladite forme ovale et une paire desdites parties de collier non saillantes (3) est formée dans la direction de l'axe mineur (5).

5. Fixation dentaire (1; 102; 103; 104) selon l'une quelconque des revendications 1 à 3, **caractérisée en ce que** la forme externe dudit joug (11) est presque ronde et la forme externe entourant lesdites portions de collier saillantes (2) et lesdites parties de collier non saillantes (3) a un diamètre plus grand que celui du joug (11), et une forme périphérique externe qui est une forme presque ronde de cercles concentriques a une forme qui est coupée par plusieurs tangentes en contact avec la surface périphérique externe dudit joug (2) et la partie qui n'est pas coupée et laissée forme lesdites portions de collier saillantes (2) et la partie qui est coupée forme lesdites parties de collier non saillantes (3).
